# EUROPEAN PATENT APPLICATION

(11) **EP 4 648 179 A1**
(43) Date of publication of application: **12.11.2025**
(21) Application number: 24901741.9
(22) Date of filing: 19.08.2024
(51) Int. Cl.: H01M 10/617, H01M 50/264, H01M 50/209, H01M 50/291

(54) **CTP BATTERY PACK AND ELECTRICAL DEVICE**

(30) Priority: 14.03.2024 CN 202410296248; 14.03.2024 CN 202420503895 U
(71) Applicant: Eve Energy Co. Ltd., Huizhou, Guangdong 516000 (CN)
(72) Inventor: ZHAO, Hengxi, Huizhou, Guangdong 516006 (CN); JIAN, Song, Huizhou, Guangdong 516006 (CN); XING, Cheng, Huizhou, Guangdong 516006 (CN); QIN, Weixin, Huizhou, Guangdong 516006 (CN); LIAO, Guang, Huizhou, Guangdong 516006 (CN)
(74) Representative: Berggren Oy
(86) International application number: PCT/CN2024/112956
(87) International publication number: WO 2025/189681

(57) **Abstract**

Provided are a CTP battery pack and an electric device. The CTP battery pack includes a housing and multiple battery cell modules. The housing has multiple containment cavities, each containment cavity containing at least one of the battery cell modules. Each battery cell module includes battery cells, a heat spreader, a first connecting member, and a second connecting member. The battery cells are arranged in a first direction, and the first connecting member, the heat spreader and the second connecting member are stacked sequentially between two adjacent ones of the battery cells.

## Description

This application claims priority to Chinese Patent Application No. 202410296248.0 filed with the China National Intellectual Property Administration (CNIPA) on March 14, 2024, the content of which is incorporated herein by reference in its entirety.

### TECHNICAL FIELD

The present application relates to the field of battery technology, and specifically to a CTP battery pack and an electric device.

### BACKGROUND

In the related art, multiple battery cells are arranged in rows in a battery pack. When the battery pack is being charged, the temperature of each battery cell increases.

### SUMMARY

### TECHNICAL PROBLEM

In the related art, the efficiency of heat transfer between two adjacent battery cells is low, resulting in a certain temperature difference between the two adjacent battery cells, and the consistency of the battery cells is poor. At the same time, there is also a large temperature difference in the height direction of a single battery cell with a large size, which, in the long run, affects the service life of the battery pack and the efficiency of charging.

### TECHNICAL SOLUTION

In a first aspect, the present application provides a CTP battery pack including: a housing and multiple battery cell modules, where the battery cell modules are provided within the housing.

Each battery cell module includes battery cells, a heat spreader, a first connecting member, and a second connecting member. The battery cells are arranged in the first direction, and the first connecting member, the heat spreader, and the second connecting member are stacked sequentially between two adjacent ones of the battery cells.

In a second aspect, the present application also provides an electric device including the CTP battery pack provided in the present application.

### BENEFICIAL EFFECT

The beneficial effect of the CTP battery pack and the electric device provided by the present application is: the CTP battery pack in the present application allows heat transfer being carried out between two adjacent battery cells in each battery cell module through a heat spreader, thereby reducing the temperature difference between two adjacent battery cells, helping to improve the uniformity of the overall temperature of the battery cell module and even of the entire CTP battery pack, and effectively avoiding the phenomenon of excessive temperature of a portion of the battery cells in the CTP battery pack, which is conducive to improving the service life of the CTP battery pack, and can also improve the charging efficiency to a certain extent.

### BRIEF DESCRIPTION OF THE DRAWINGS

FIG. 1 is a schematic diagram of the structure of a CTP battery pack provided by some embodiments of the present application.
FIG. 2 is a schematic diagram of the structure of a CTP battery pack provided by some other embodiments of the present application.
FIG. 3 is a schematic diagram of the structure of a battery cell module provided by some embodiments of the present application.
FIG. 4 is a schematic diagram of the structure of a battery cell module provided by some other embodiments of the present application.
FIG. 5 is an enlarged view of region A in FIG. 4.
FIG. 6 is an enlarged view of region B in FIG. 4.
FIG. 7 is a schematic diagram of the structures of a battery cell, a heat spreader, a first connecting member, a second connecting member, a first preview member, and a second preview member provided by some embodiments of the present application.
FIG. 8 is a schematic diagram of the structure of a housing provided by some embodiments of the present application.
FIG. 9 is a partially enlarged view of a second beam provided by some embodiments of the present application.

Reference signs are as follows.
10-housing; 11-first beam; 12-second beam; 13-reinforcement member; 14-outer frame; M-accommodation cavity;
20-battery cell module;
21-battery cell; 22-heat spreader; 23-first connecting member; 24-second connecting member; 25-first pre-tensioning member; 26-second pre-tensioning member;
30-end plate;
40-first limiting member;
50-second limiting member.

### DETAILED DESCRIPTION

A Cell To Pack (CTP) battery pack has battery cells directly integrated into the battery pack, which avoids the standardized module stage and the use of an intermediate module structure, and therefore may effectively enhance the space utilization and energy density of the battery pack. In the CTP battery pack in the related art, thermally-conductive silicone pads or foam are generally used between battery cells to absorb the expansion of battery cells, which cannot solve the problem of large temperature difference between the battery cells, especially in the case of low-temperature charging. In addition, a battery pack with a relatively wide box (housing) in the related art may have a risk of collapse in the middle of the battery pack due to the relatively heavy battery cells. In addition, in a CTP battery pack, steel strips are usually used to bundle for forming different groups, and the structure of such battery pack is not compact enough due to the large gaps between modules and low space utilization, which leads to low energy density.

To this end, the present application provides a CTP battery pack and an electric device including the CTP battery pack. Heat spreaders, such as vapor chamber plates (VC plates), are provided between battery cells, which can reduce the temperature difference of a single battery cell along the height direction and the temperature difference between adjacent battery cells, improving the consistency of the battery cells, and prolonging the service life of the battery pack.

In some embodiments, hollow beams are provided within the battery pack to divide the interior of the battery pack into multiple accommodation spaces, and the hollow beams can absorb the expansive deformation and prevent the expansion force of the battery cell module from being too large; at the same time, the transverse and longitudinal beams within the housing can also play a role in strengthening the structural strength and preventing the middle of the battery pack from collapsing. This application is described in details below.

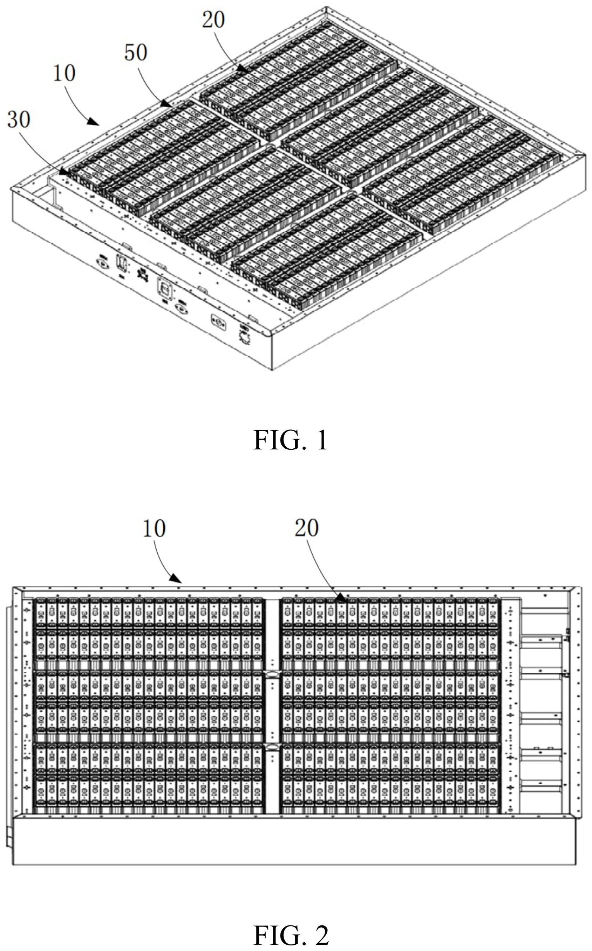

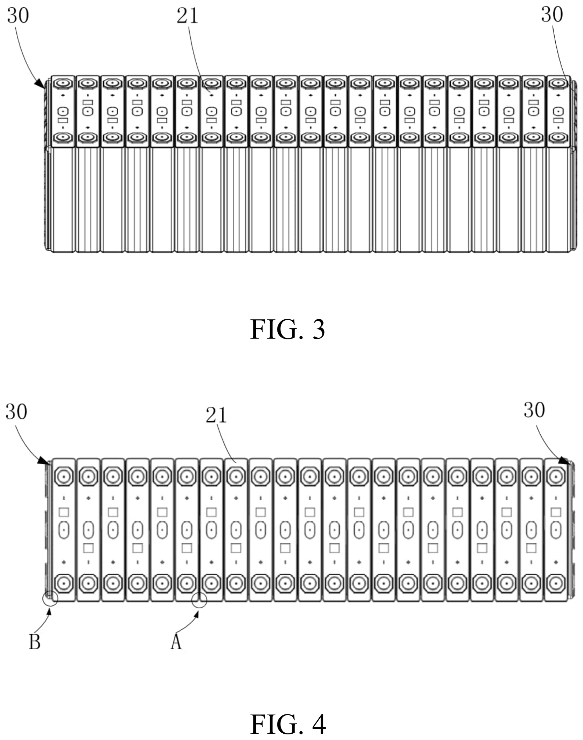

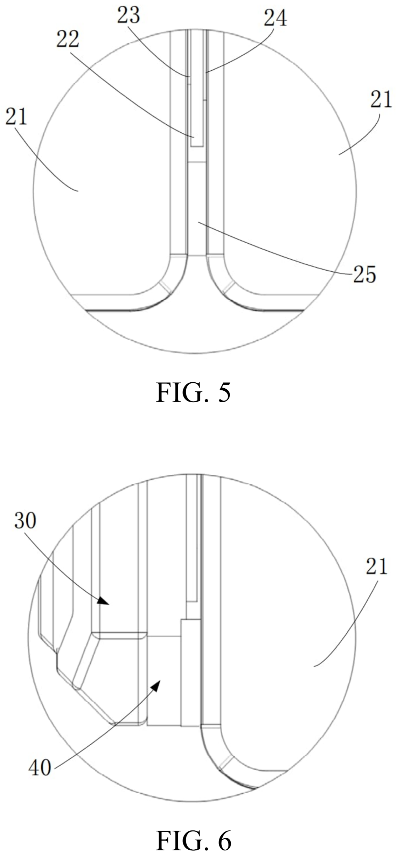

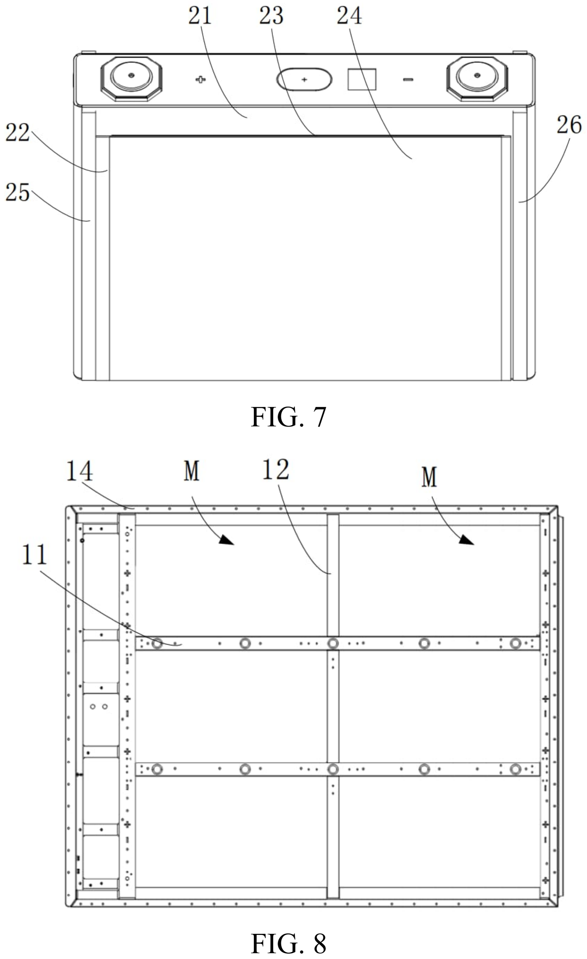

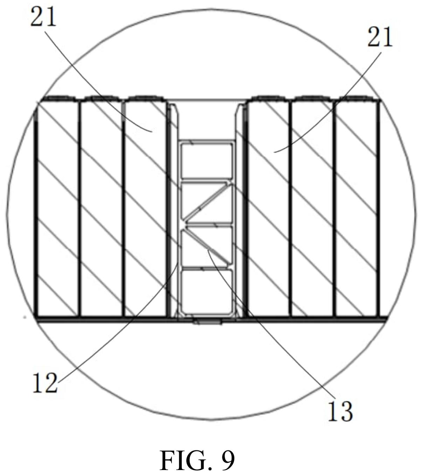

Referring to FIGS. 1 to 9, some embodiments of the present application provide a CTP battery pack including: a housing 10 and multiple battery cell modules 20.

The housing 10, which may also be referred to as a box, is a base member which may be configured to mount and protect the battery cell modules 20. The housing 10 has multiple containment cavities M each provided with at least one battery cell module 20 therein. The containment cavities M of the housing 10 may contain the battery cell modules 20, and the walls of the containment cavities M surround the battery cell modules 20, which provides a certain degree of protection.

In one embodiment, the housing 10 may be a polygonal housing 10, for example, a rectangular housing 10, or a cylindrical housing 10, and the shape of the housing 10 is not specifically limited herein. In addition, each containment cavity M may be a rectangular cavity, a cylindrical cavity, etc., the shape of which may be determined according to the shape of the corresponding battery cell module(s) 20.

In one embodiment, the battery cell module 20 may be of a cuboid shape, and accordingly, the containment cavity M may be a rectangular cavity to adaptively contain the cuboid battery cell module 20.

In one embodiment, one or two battery cell modules 20 may be contained in each containment cavity M, in which case the dimensions of the battery cell modules 20 fit the dimensions of the containment cavity M. Of course, three or four or more battery cell modules 20 may be contained in each containment cavity M, in which case the battery cell modules 20 may be assembled together and co-located in the containment cavity M. It should be noted that the number of battery cell modules 20 may be selected according to the capacity of the CTP battery pack.

Each battery cell module 20 includes multiple battery cells 21. The battery cells 21 are disposed in the first direction, and the battery cells 21 may be connected in series or in parallel or in other way to form a battery cell module 20 with a larger capacity, current and voltage. The first direction in this embodiment of the present application may be the thickness direction of the battery cells 21.

During the charging, the temperatures of the battery cells 21 rise. To prevent a large temperature difference between the battery cells 21 from affecting the service life of the battery cell modules 20 and even the entire CTP battery pack, as well as affecting the charging efficiency, each battery cell module 20 further includes one or more heat spreaders 22, and each heat spreader 22 is provided between two adjacent battery cells 21 and can transmit the heat between the two adjacent battery cells 21, thereby reducing the temperature difference between the two adjacent battery cells 21, helping to improve the overall temperature uniformity of the battery cell module 20, and effectively preventing some battery cell(s) 21 from being overheated and affecting the overall service life and the charging efficiency of the battery cell module(s) 20 or even the CTP battery pack.

In addition, the heat spreader 22 also has a certain contact area with the single battery cell 21 such that the heat spreader 22 can also promote the heat transfer efficiency between the different regions of the single battery cell 21, which is conducive to improving the uniformity of the temperature of the various regions of the single battery cell 21, and effectively preventing the situation in which the localized temperature of the single battery cell 21 is too high and affects the service life of the battery cell 21.

The heat spreader 22 may be in the form of a plate, a strip, or other shapes, and this design can increase the contact area between the heat spreader 22 and the battery cell 21, improve the heat transfer efficiency to a certain extent, and improve the uniformity of temperature.

In one embodiment, the heat spreader 22 may be a metal plate, for example, a stainless-steel plate or a copper plate. The heat spreader 22 may also be a non-metallic heat transfer plate, such as a graphite plate. Of course, the heat spreader 22 may also be made of other materials and in other shapes, without specific limitation herein.

Each battery cell module 20 further includes one or more first connecting members 23 and one or more second connecting members 24, and each first connecting member 23 and each second connecting member 24 are disposed on opposite sides of a corresponding heat spreader 22. In this way, one first connecting member 23, one heat spreader 22, and one second connecting member 24 are sequentially stacked between two adjacent battery cells 21, one side of the heat spreader 22 is fixedly connected to a wall surface of one of the two adjacent battery cells 21 by the first connecting member 23, and the other side of the heat spreader 22 is fixedly connected to a wall surface of the other of the two adjacent battery cells 21 by the second connecting member 24. Therefore, it can be ensured that the two adjacent battery cells 21 won't be separated, and heat transfer between the two adjacent battery cells 21 can be realized through the heat spreader 22, ensuring the uniformity of temperature between the two adjacent battery cells 21.

In this embodiment, the first connecting member 23 and the second connecting member 24 can serve to fixedly connect the heat spreader 22 to the battery cells 21 and to transfer heat between the heat spreader 22 and the battery cells 21.

In one embodiment, the structure or composition or others of the first connecting member 23 and the second connecting member 24 may be the same or different. In this embodiment, the first connecting member 23 and the second connecting member 24 with the same structure or composition or others are used, i.e., the first connecting member 23 and the second connecting member 24 are two identical connecting members, which are connected to two side surfaces of the heat spreader 22 respectively.

In one embodiment, the materials of the first connecting member 23 and the second connecting member 24 may both include a structural adhesive. The structural adhesive may provide both bonding and heat transfer. Of course, structures made of other materials may also be utilized, and are not specifically limited herein.

In one embodiment, the first connecting member 23 and the second connecting member 24 are both thermally conductive structural adhesives, and the structural adhesives can secure the heat spreader 22 between two adjacent battery cells 21 and can improve the structural strength of the battery cell module 20.

For the CTP battery pack provided in the embodiments of the present application, heat transfer can be carried out between two adjacent battery cells 21 in each battery cell module 20 through the heat spreader 22, thereby reducing the temperature difference between the two adjacent battery cells 21, helping to improve the uniformity of the overall temperature of the battery cell module 20 and even the entire CTP battery pack, and effectively avoiding the phenomenon of excessive temperature of a portion of the battery cells 21 in the CTP battery pack, which is conducive to improving the service life of the CTP battery pack, and can also improve the charging efficiency to a certain extent.

In one embodiment, the thermal conductivity of the heat spreader 22 in the first direction is 10W/(m·K) ~ 500W/(m·K), for example, 10W/(m·K), 36W/(m·K), 50W/(m·K), 100W/(m·K), 200W/(m·K), 400W/(m·K), 500W/(m·K), etc. Of course, other values may be selected, which are not specifically limited herein. Accordingly, the thermal conductivity of the heat spreader 22 in the first direction is relatively high, thereby ensuring better thermal conductivity in the first direction, and better reducing the temperature difference between the battery cells 21. The first direction is the thickness direction of the battery cells 21. Of course, it may also be the thickness direction of the heat spreader 22.

The thermal conductivity of the heat spreader 22 in the third direction is 2000W/(m·K) ~ 8000W/(m·K), for example, 2000W/(m·K), 3000W/(m·K), 5000W/(m·K), 7000W/(m·K), 8000W/(m·K), etc. Of course, other values may be selected, which are not specifically limited herein. Accordingly, the thermal conductivity of the heat spreader 22 in the third direction is extremely high, thereby ensuring excellent thermal conductivity in the third direction, and well ameliorating the effect of the temperature difference of the individual battery cell 21 in the third direction. The third direction is perpendicular to the first direction, and specifically, the third direction may be the height direction of the battery cells 21, and of course may also be the length direction of the heat spreader 22.

In one embodiment, the battery cell module 20 further includes one or more pre-tensioning members, each pre-tensioning member being provided between two adjacent battery cells 21. The pre-tensioning members can play a pre-tensioning role to improve the stability of the battery cell module 20.

This embodiment is not limited to the specific shape and structure of the pre-tensioning members. For example, two strip-shaped pre-tensioning members may be respectively provided on two sides of the edge of the heat spreader 22 and two connecting members. Of course, other shapes and structures of the pre-tensioning members may be selected, for example, frame-shaped pre-tensioning members or other structural forms of pre-tensioning member.

In one embodiment, the pre-tensioning members include a first pre-tensioning member 25 and a second pre-tensioning member 26. The first pre-tensioning member 25 and the second pre-tensioning member 26 are both disposed between two adjacent battery cells 21 and spaced apart in the second direction. The second direction is perpendicular to the first direction, and specifically, the second direction may be the width direction of the battery cells 21.

Specifically, one side of the first pre-tensioning member 25 abuts against a sidewall of one of two adjacent battery cells 21, and the other side of the first pre-tensioning member 25 abuts against a sidewall of the other of the two adjacent battery cells 21 so that the two adjacent battery cells 21 have a tendency to move away from each other under the pre-tension of the first pre-tensioning member 25, which is conducive to improving the stability of the battery cells 21. Similarly, one side of the second pre-tensioning member 26 abuts against a sidewall of one of two adjacent battery cells 21, and the other side of the second pre-tensioning member 26 abuts against a sidewall of the other of the two adjacent battery cells 21 so that the two adjacent battery cells 21 have a tendency to move away from each other under the pre-tension of the second pre-tensioning member 26, which is conducive to improving the stability of the battery cells 21.

The first pre-tensioning member 25 and the second pre-tensioning member 26 are spaced apart in the second direction between two adjacent battery cells 21, and the heat spreader 22, the first connecting member 23, and the second connecting member 24 are also located between the two adjacent battery cells 21. As a result, the heat spreader 22, the first connecting member 23, and the second connecting member 24 are located between the first pre-tensioning member 25 and the second pre-tensioning member 26. The first pre-tensioning member 25 and the second pre-tensioning member 26 on two sides of the heat spreader 22, first connecting member 23 and second connecting member 24 in the second direction can restrict the heat spreader 22, the first connecting member 23 and the second connecting member 24, thereby preventing them from being exposed at two sides of the battery cell module 20. The first pre-tensioning member 25 and the second pre-tensioning member 26 also have good compression and resilience properties. The first pre-tensioning member 25 and the second pre-tensioning member 26 may undergo a pre-tensioning process before the battery cell module 20 is mounted to the housing 10. During the pre-tensioning, the first pre-tensioning member 25 and the second pre-tensioning member 26 are compressed; after the pre-tensioning, the first pre-tensioning member 25 and the second pre-tensioning member 26 rebound appropriately with a pre-tensioning force remaining within a reasonable range.

In one embodiment, the materials of the first pre-tensioning member 25 and the second pre-tensioning member 26 both include foam, e.g., X PP foam. Foam has good compression and elastic properties. In a specific embodiment, the first pre-tensioning member 25 and the second pre-tensioning member 26 are foam, and of course may be other materials, which are not specifically limited herein.

After the assembly of the battery cell module 20 is complete, the first connecting member 23, the heat spreader 22, the second connecting member 24, the first pre-tensioning member 25 and the second pre-tensioning member 26 are all located between two adjacent battery cell modules 20. To prevent structural interference, the thickness of the first pre-tensioning member 25 and the second pre-tensioning member 26 in the first direction is equal to the sum of the thicknesses of the heat spreader 22, the first connecting member 23 and the second connecting member 24 in the first direction, thereby ensuring that two sides of the first pre-tensioning member 25 and two sides of the second pre-tensioning member 26 contact the sides of the two adjacent battery cells 21 respectively and exert a pre-tensioning force, and ensuring that two sides of the first connecting member 23 and two sides of the second connecting member 24 are stably connected to the sides of the battery cells 21 and to the sides of the heat spreader 22 respectively, thereby improving the overall strength of the battery cell module 20.

After the assembly of the battery cell module 20 is complete, the first pre-tensioning member 25 and the second pre-tensioning member 26 generate a pre-tensioning force that is less than the connection force of the first connecting member 23 and the second connecting member 24 for connecting to the heat spreader 22 and the battery cells 21, thereby effectively preventing the heat spreader 22 from separating from the battery cells 21. Of course, in an unassembled battery cell module 20, the thickness of the first pre-tensioning member 25 and the thickness of the second pre-tensioning member 26 may be slightly larger than the sum of the thicknesses of the heat spreader 22, the first connecting member 23, and the second member 24, so as to ensure the pre-tensioning effect.

In one embodiment, the cross-sectional area of the first connecting member 23 and the cross-sectional area of the second connecting member 24 are both less than or equal to the cross-sectional area of the heat spreader 22. For example, in some cases, the cross-sectional area of the first connecting member 23 and the cross-sectional area of the second connecting member 24 may be less than (e.g., slightly less than) the cross-sectional area of the heat spreader 22; alternatively, in other cases, the cross-sectional area of the first connecting member 23 and the cross-sectional area of the second connecting member 24 may both be equal to the cross-sectional area of the heat spreader 22. This design ensures that there is sufficiently large fixing areas between the heat spreader 22 and the battery cells 21, thereby ensuring the stability of the connection, and also avoiding the cross-sectional areas of the first connecting element 23 and the second connecting element 24 being too large.

In one embodiment, the CTP battery pack further includes end plates 30. Each end plate 30 is disposed between a corresponding battery cell module 20 and a sidewall of a corresponding containment cavity M in the first direction, and the end plate 30 can cover an end of the battery cell module 20 to protect the end of the battery cell module 20, and also can play a certain limiting effect on the battery cell module 20, improving the stability of the battery cell module 20 within the containment cavity M.

After the assembly of the battery cell module 20 is complete, the deformation capacity of the first connecting member 23, the second connecting member 24, and the heat spreader 22 is weak, and basically cannot absorb the expansive deformation energy of the battery cell module 20. For this reason, the CTP battery pack further includes a first limiting member 40, and the first limiting member 40 is elastically connected between a battery cell module 20 and its corresponding end plate 30. The elasticity of the first limiting member 40 not only prevents the battery cell module 20 from moving relative to the end plate 30, thereby ensuring the stability of the battery cell module 20 within the containment cavity M, but also absorbs the energy of expansion and deformation in the case of the expansive deformation of the battery cell module 20, which is achieved by the elastic deformation of the first limiting member 40, thereby effectively preventing interference between the structures caused by the expansive deformation of the battery cell module 20.

In one embodiment, a first limiting member 40 may be provided between each end of two ends of each battery cell module 20 and the end plate 30 corresponding to the end; alternatively, a first limiting member 40 may also be provided between one end of each battery cell module 20 and the corresponding end. The specific settings may be determined based on the actual working conditions.

In one embodiment, the material of the first limiting member 40 may include foam, which has good deformation capability and may also provide some insulation. In a specific embodiment, the first limiting member 40 may be made of foam. In addition, the thickness of the foam herein may be slightly thicker than the thickness of the foam of the first connecting member 23 and the second connecting member 24, achieving better deformation absorption and insulation.

In one embodiment, the CTP battery pack further includes a second limiting member 50. The second limiting member 50 is disposed between a battery cell module 20 and a sidewall of a corresponding containment cavity M in the second direction, where the second direction is perpendicular to the first direction. The second limiting member 50 can fill the gap between the battery cell module 20 and the sidewall of the containment cavity M, and can also limit the battery cell module 20 in the second direction, preventing the battery cell module 20 from moving freely in the second direction.

In one embodiment, the material of the second limiting member 50 may include a polyurethane foam sealant, allowing the polyurethane foam sealant to fill the gap between the battery cell module 20 and the sidewall of the containment cavity M, both for sealing and limiting.

In one embodiment, the housing 10 includes an outer frame 14, multiple first beams 11, and multiple second beams 12, and the first beams 11 and the second beams 12 are connected to the outer frame 14 and are within the outer frame 14. The first beams 11 are spaced apart in the first direction, the second beams 12 are spaced apart in the second direction, the second beams 12 intersect the first beams 11 respectively to separate the outer frame 14 into multiple containment cavities M, and thereby more battery cell modules 20 can be accommodated by the containment cavities M. Besides, the first beams 11 and the second beams 12 cooperate to strengthen the structural strength, thereby increasing the modal in the first and second direction, and preventing the CTP battery pack from locally collapsing.

In one embodiment, one first beam 11 and one second beam 12 may be disposed vertically to form a cross beam configuration.

In one embodiment, the first beams 11 and the second beams 12 are all hollow beams. The hollow beams help to absorb the expansive deformation of the battery cell modules 20, so as to prevent the expansive deformation of the battery cell modules 20 from being limited by the housing 10. The hollow beams can also reduce the weight and save materials.

Additionally, the first beams 11 and the second beams 12 each have a cavity, multiple reinforcing members 13 are provided within each cavity, and the reinforcement members 13 are spaced apart along the extension direction of each first beam 11 or each second beam 12. The reinforcement members 13 can reinforce the first beam 11 or the second beam 12 to ensure the structural strength of the first beam 11 or the second beam 12.

In one embodiment, the first beams 11 and the second beams 12 may be square tube beams, and the reinforcement members 13 may be connected to each square tube beam along the diagonal of the square tube beam such that two triangular structures can be formed within the square tube beam, which further serves to reinforcement and improves the structural strength.

Some embodiments of the present application further provide an electric device including the CTP battery pack of the embodiments of the present application. The electric device may include an electric vehicle, such as a pure electric vehicle, a hybrid electric vehicle, a plug-in hybrid electric vehicle, an electric bicycle, an electric scooter, an electric golf cart, an electric truck, and the like, and may include an electric train, a ship, a satellite, and an energy storage system, and of course may include other types of electric devices, which are not specifically limited herein.

As can be seen from the above, the CTP battery pack in the embodiments of the present application can reduce the temperature difference between different areas of a single battery cell 21 and the temperature difference between adjacent battery cells 21 by the heat spreader 22, thereby improving the consistency of the temperature of the battery cells and prolonging the service life of the battery pack. By using the housing 10 including the hollow beams, the hollow beams can absorb the impact deformation of the battery cell modules 20, preventing excessive impact forces of the battery cell modules 20. By using the housing 10 with cross-arranged first beams 11 and second beams 12, the structural strength can be enhanced, and the local collapse of the CTP battery pack can be prevented.

## Claims

1. A CTP battery pack, **characterised by** comprising: a housing (10) and a plurality of battery cell modules (20), wherein the plurality of battery cell modules (20) are provided within the housing (10);
wherein each battery cell module (20) comprises battery cells (21), a heat spreader (22), a first connecting member (23), and a second connecting member (24), the battery cells (21) being arranged in a first direction, and the first connecting member (23), the heat spreader (22) and the second connecting member (24) being stacked sequentially between two adjacent ones of the battery cells (21).

2. The CTP battery pack according to claim 1, wherein each battery cell module (20) further comprises a pre-tensioning member;
wherein the pre-tensioning member is disposed between the two adjacent battery cells (21); and
the pre-tensioning member is disposed on at least one side of an edge of the heat spreader (22), first connecting member (23), and second connecting member (24).

3. The CTP battery pack according to claim 2, wherein a thickness of the pre-tensioning member in the first direction is equal to a sum of thicknesses of the heat spreader (22), the first connecting member (23), and the second connecting member (24) in the first direction.

4. The CTP battery pack according to claim 2 or 3, wherein the pre-tensioning member comprises foam; and/or
wherein the pre-tensioning member comprises a first pre-tensioning member (25) and a second pre-tensioning member (26), the first pre-tensioning member (25) and the second pre-tensioning member (26) being spaced apart in a second direction, and the second direction being perpendicular to the first direction; and
the heat spreader (22), the first connecting member (23), and the second connecting member (24) are located between the first pre-tensioning member (25) and the second pre-tensioning member (26).

5. The CTP battery pack according to claim 1, wherein the heat spreader (22) has a thermal conductivity of 10W/(m·K) ~ 500W/(m·K) in the first direction; and
the heat spreader (22) has a thermal conductivity of 2000W/(m·K) ~ 8000W/(m·K) in a third direction, wherein the third direction is perpendicular to the first direction.

6. The CTP battery pack according to claim 1, wherein a cross-sectional area of the first connecting member (23) and a cross-sectional area of the second connecting member (24) are both less than or equal to a cross-sectional area of the heat spreader (22).

7. The CTP battery pack according to claim 1 or 6, wherein the first connecting member (23) and the second connecting member (24) each comprise a structural adhesive.

8. The CTP battery pack according to claim 1, wherein the housing (10) has a plurality of containment cavities (M) each containing at least one of the plurality of battery cell modules (20);
the CTP battery pack further comprises an end plate (30) and a first limiting member (40), the end plate (30) is disposed between a corresponding one of the plurality of battery cell modules (20) and a sidewall of a corresponding one of the plurality of containment cavities (M) in the first direction, and
the first limiting member (40) is elastically connected between the end plate (30) and the battery cell module (20).

9. The CTP battery pack according to claim 8, wherein a material of the first limiting member (40) comprises foam.

10. The CTP battery pack according to claim 8, further comprising a second limiting member (50), the second limiting member (50) being disposed between a corresponding one of the plurality of battery cell modules (20) and a sidewall of a corresponding one of the plurality of containment cavities (M) in a second direction, wherein the second direction is perpendicular to the first direction.

11. The CTP battery pack according to claim 8, wherein the housing (10) comprises an outer frame (14), at least one first beam (11), and at least one second beam (12), and the at least one first beam (11) and the at least one second beam (12) are connected to the outer frame (14) and are within the outer frame (14);
the at least one first beam (11) is spaced apart in the first direction, the at least one second beam (12) is spaced apart in a second direction, and the at least one first beam (11) intersect the at least one second beam (12) to separate the outer frame (14) into the plurality of containment cavities (M); and
the at least one first beam (11) and the at least one second beam (12) are hollow beams.

12. The CTP battery pack according to claim 11, wherein the at least one first beam (11) and the at least one second beam (12) each have a cavity, a plurality of reinforcing members (13) are provided within each cavity, and the plurality of reinforcing members (13) in each cavity are spaced apart along an extension direction of the first beam (11) or the second beam (12) having the cavity.

13. An electric device, **characterised by** comprising the CTP battery pack according to any one of claims 1 to 12.
